# EUROPEAN PATENT APPLICATION

(11) **EP 4 550 563 A1**
(43) Date of publication of application: **07.05.2025**
(21) Application number: 23891932.8
(22) Date of filing: 10.11.2023
(51) Int. Cl.: H01M 50/531, H01M 50/184, H01M 50/567, H01M 50/105, H01M 50/553, H01M 50/593, H01M 50/591, H01M 50/517, H01M 50/211, H01M 50/249

(54) **BATTERY CELL, BATTERY PACK INCLUDING SAME, AND VEHICLE INCLUDING BATTERY PACK**

(30) Priority: 16.11.2022 KR 20220154013
(71) Applicant: LG Energy Solution, Ltd., Seoul 07335 (KR)
(72) Inventor: YOON, Kyoung-Soon, Daejeon 34122 (KR)
(74) Representative: Plasseraud IP
(86) International application number: PCT/KR2023/018108
(87) International publication number: WO 2024/106865

(57) **Abstract**

Disclosed is a battery cell, which includes an electrode assembly having a cell body and an electrode tab extending from the cell body; a cell case having an accommodation portion configured to accommodate the electrode assembly and a peripheral portion extending outward from the accommodation portion; and a first conductive frame located on a first surface of the peripheral portion and electrically connected to the electrode tab through the peripheral portion; and a second conductive frame located on a second surface of the peripheral portion and electrically connected to the electrode tab through the peripheral portion.

## Description

### TECHNICAL FIELD

The present disclosure relates to a battery cell, a battery pack including the battery cell, and a vehicle including the battery pack.

The present application claims priority to Korean Patent Application No. 10-2022-0154013 filed on November 16, 2022 in the Republic of Korea, the disclosures of which are incorporated herein by reference.

### BACKGROUND ART

When manufacturing a battery pack using secondary battery cells to apply a secondary battery to, for example, a device that requires high capacity/high output, such as a vehicle, it is common to sequentially go through the stages of battery cell - battery module - battery pack.

However, if a battery pack is manufactured through the above stages, the process becomes complicated since the battery module manufacturing step is required in the middle, and also unnecessary space loss may occur due to the space occupied by the module housing applied for manufacturing the battery module.

In addition, according to this process, it may be required to additionally apply electrical connection components required to modularize a plurality of battery cells and electrical connection components required to electrically connect a plurality of battery modules in order to increase the capacity/output of the battery pack. This may cause space loss, as well as a decrease in productivity due to an increase in manufacturing cost and a decrease in production speed, caused by applying many components.

There are various types of secondary battery cells, such as pouch-type battery cells, cylindrical battery cells, and prismatic battery cells. Among them, pouch-type battery cells particularly have relatively soft characteristics compared to other types of battery cells due to the case material used therein. For this reason, when a battery pack is applied using pouch-type battery cells, for example, a battery module is manufactured by applying a separate cover member that supports one battery cell or a plurality of battery cells, and then a plurality of battery modules may be connected to manufacture a battery pack. This may cause space loss, as explained above.

In addition, pouch-type battery cells generally do not have any components that may function as an external terminal other than electrode leads in the form of a thin metal plate. Therefore, in order to manufacture a high capacity/high output battery pack using the pouch-type battery cells, it is generally necessary to apply components that may function as separate external terminals. As explained above, this may cause a decrease in productivity since additional components are applied.

Therefore, when manufacturing a battery pack using various types of battery cells, including pouch-type battery cells, it is required to develop a battery cell with a structure that may minimize additional components to be applied or a structure that does not require additional components to be applied.

### DISCLOSURE

### Technical Problem

The present disclosure is designed to solve the problems of the related art, and therefore the present disclosure is directed to providing a battery cell with a structure that may minimize additional components to be applied or a structure that does not require additional components to be applied when manufacturing a battery pack using battery cells.

In another aspect, the present disclosure is directed to eliminating or minimizing the possibility of weakening the sealing force of a cell case due to the application of a component that functions as a terminal of a battery cell.

In still another aspect, when applying a component that functions as a terminal of a battery cell, the present disclosure is directed to preventing the sealing force from being deteriorated at a joint portion by blocking the component not to be drawn out through the joint portion of the pouch case.

In still another aspect, the present disclosure is directed to strengthening the bonding force of the sealing region of the pouch case, which is formed in a direction where the terminal of the battery cell is located.

However, the technical object to be solved by the present disclosure is not limited to the above, and other objects not mentioned herein will be clearly understood by those skilled in the art from the following disclosure.

### Technical Solution

In one aspect of the present disclosure, there is provided a battery cell, comprising: an electrode assembly having a cell body and an electrode tab extending from the cell body; a cell case having an accommodation portion configured to accommodate the electrode assembly and a peripheral portion extending outward from the accommodation portion; a first conductive frame located on a first surface of the peripheral portion and electrically connected to the electrode tab through the peripheral portion; and a second conductive frame located on a second surface of the peripheral portion and electrically connected to the electrode tab through the peripheral portion.

The first conductive frame may include a first terminal portion extending in a direction away from the first surface, and the second conductive frame may include a second terminal portion extending in a direction away from the second surface at a position corresponding to the first terminal portion.

When a pair of battery cells are stacked to overlap each other, the first conductive frame and the second conductive frame may be configured so that the first terminal portion and the second terminal portion provided at different battery cells and extending toward each other are at least partially overlapped to face each other.

When a pair of battery cells are stacked to overlap each other, the first conductive frame and the second conductive frame may be configured so that the first terminal portion and the second terminal portion provided at different battery cells and extending toward each other are at least partially overlapped to contact each other.

A distance from an outer surface of one of the first terminal portion and the second terminal portion located closer to the cell body to the cell body and a distance from an inner surface of the other of the first terminal portion and the second terminal portion located farther from the cell body to the cell body may be substantially identical.

The first terminal portion and the second terminal portion may be provided in plurality, respectively.

The battery cell may have a rotationally symmetrical shape whose appearance is substantially identical when being rotated 180 degrees about a central axis passing through a center thereof.

Each of the first terminal portion and the second terminal portion may have a fastening hole configured to allow a fastening member to be coupled.

The battery cell may further comprise an electrode lead electrically coupled to the electrode tab and located inside the cell case. In this case, the first conductive frame may be electrically coupled to the first surface of the electrode lead through the peripheral portion, and the second conductive frame may be electrically coupled to the second surface of the electrode lead through the peripheral portion.

The first conductive frame and the second conductive frame may be configured to pressurize both surfaces of the peripheral portion.

The battery cell may further comprise a first insulating frame configured to partially cover the first conductive frame; and a second insulating frame configured to partially cover the second conductive frame.

The first insulating frame and the second insulating frame may be configured to pressurize both surfaces of the peripheral portion.

In another aspect of the present disclosure, there is also provided a battery pack, comprising: a cell stack including a plurality of battery cells according to an embodiment of the present disclosure; and a pack housing configured to accommodating the cell stack.

In the battery pack, the plurality of battery cells may be electrically connected to each other, and in a first battery cell and a second battery cell adjacent to each other among the plurality of battery cells, the first conductive frame provided at the first battery cell and the second conductive frame provided at the second battery cell may be electrically coupled by a fastening member.

In another aspect of the present disclosure, there is also provided a vehicle, comprising the battery pack according to an embodiment of the present disclosure.

### Advantageous Effects

According to one aspect of the present disclosure, it is possible to provide a battery cell with a structure that may minimize additional components to be applied or a structure that does not require additional components to be applied when manufacturing a battery pack using battery cells.

According to another aspect of the present disclosure, the possibility of weakening the sealing force of the cell case due to the application of a component that functions as a terminal of the battery cell may be eliminated or minimized.

According to still another aspect of the present disclosure, when applying a component that functions as a terminal of a battery cell, it is possible to prevent the sealing force from being deteriorated at the joint portion by blocking the component not to be drawn out through the joint portion of the pouch case.

According to still another aspect of the present disclosure, in the sealing region of the pouch case, the bonding force of the sealing region formed in a direction where the terminal of the battery cell is located may be strengthened.

However, the beneficial effects that can be derived through the present disclosure are not limited to the effects described above, and other advantageous effects not mentioned above will be clearly understood by those skilled in the art from the following disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view showing a part of the appearance of a battery cell according to an embodiment of the present disclosure.
FIG. 2 is an exploded perspective view showing the battery cell of FIG. 1.
FIGS. 3 and 4 are plan views showing one surface and the other surface of the battery cell shown in FIG. 1, respectively.
FIG. 5 is a diagram showing a coupling structure between a conductive frame of the battery cell disposed at the top and a conductive frame of the battery cell disposed at the bottom when a pair of battery cells are coupled according to an embodiment of the present disclosure.
FIG. 6 is a drawing to explain the rotationally symmetrical shape of the battery cell according to an embodiment of the present disclosure.
FIG. 7 is a plan view showing the internal structure of the battery cell according to an embodiment of the present disclosure.
FIG. 8 is a diagram showing the battery cell according to an embodiment of the present disclosure, with the insulating frame disposed at the top being removed.
FIG. 9 is a cross-sectional view, taken along line A-A' of FIG. 1.
FIG. 10 is a diagram to explain the area where sealing is applied in the battery cell according to an embodiment of the present disclosure.
FIG. 11 is a diagram to explain the pressurization of a peripheral portion by the conductive frame disposed at the top and the conductive frame disposed at the bottom in the battery cell according to an embodiment of the present disclosure.
FIG. 12 is a cross-sectional view, taken along line B-B' of FIG. 1.
FIGS. 13 and 14 are diagrams to explain the coupling structure of an electrode lead and a tab cover member of the present disclosure.
FIG. 15 is a diagram showing a battery pack according to an embodiment of the present disclosure.
FIG. 16 is a drawing showing a terminal fastening structure for forming a cell stack of the present disclosure.
FIG. 17 is a drawing showing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

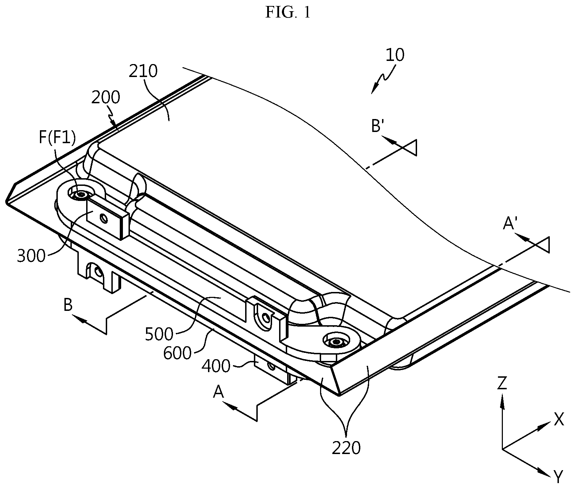

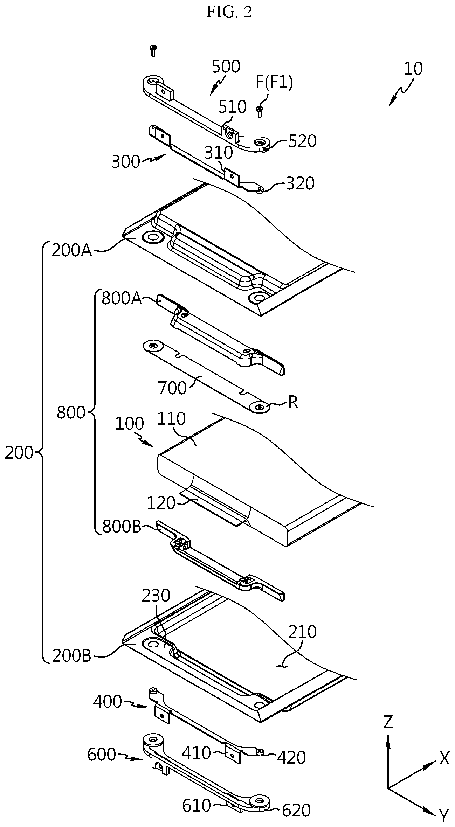

FIG. 1 is a perspective view showing a part of the appearance of a battery cell according to an embodiment of the present disclosure, and FIG. 2 is an exploded perspective view showing the battery cell of FIG. 1.

Referring to FIGS. 1 and 2, the battery cell 10 according to an embodiment of the present disclosure may include an electrode assembly 100, a cell case 200, a first conductive frame 300, and a second conductive frame 400.

The electrode assembly 100 may include a cell body 110 and an electrode tab 120 extending from the cell body 110. The cell case 200 may include an accommodation portion 210 configured to accommodate the electrode assembly 100 and a peripheral portion 220 extending outward from the accommodation portion 210. The first conductive frame 300 may be located on the first surface of the peripheral portion 220 of the cell case 200. The first conductive frame 300 may be electrically connected to the electrode tab 120 of the electrode assembly 100 through the peripheral portion 220 of the cell case 200. The second conductive frame 400 may be located on the second surface of the peripheral portion 220 of the cell case 200 (a surface opposite to the first surface of the peripheral portion 220). The second conductive frame 400 may be electrically connected to the electrode tab 120 of the electrode assembly 100 through the peripheral portion 220 of the cell case 200.

According to the above configuration of the battery cell 10 of the present disclosure, the first conductive frame 300 and the second conductive frame 400 located on the peripheral portion 220 of the cell case 200 may be used as external terminals for electrical connection. Accordingly, when a cell stack is formed by stacking a plurality of the battery cells 10, the second conductive frame 400 provided in the battery cell 10 disposed at the top and the first conductive frame 400 provided in the battery cell 10 disposed at the bottom may be fastened, which may allow easy electrical connection.

In addition, when a component that may be used as an external terminal is provided on the peripheral portion 220 of the cell case 200, an electrode lead or other electrical connection component need not be exposed to the outside of the cell case 200 through the sealing portion (bonding portion) of the cell case 200. If electrical connection components are drawn out from the inside of the cell case 200 through the sealing portion, the thickness and/or width of the electrical connection components may be greatly limited to prevent a decrease in the sealing force in the drawing-out region. If the thickness and/or width of the electrical connection components are limited, it may be difficult to manage the resistance of the battery cell 10 below a certain level. From this perspective, the battery cell 10 of the present disclosure, which is configured so that there is no need to draw out electrical connection components through the sealing region of the cell case 200, may secure a sufficient thickness of the conductive frame 400 to function as an external terminal, which may greatly reduce the resistance of the cell itself.

Meanwhile, the electrode assembly 100 may include a first electrode, a second electrode, and a separator interposed therebetween. The electrode assembly 100 may be a stack-type electrode assembly in which the first electrode, the separator, and the second electrode are stacked at least once, or a jelly-roll type electrode assembly in which the stack is wound. The first electrode may be a positive electrode or a negative electrode, and the second electrode may be an electrode with an opposite polarity to the first electrode. The first electrode and the second electrode may include a coated portion, which is a region coated with electrode active material, and an uncoated portion, which is a region not coated with electrode active material. The electrode tab 120 of the present disclosure may be an uncoated portion or a separate lead tab coupled to the uncoated portion. When the electrode assembly 100 includes a plurality of first electrodes and second electrodes, the electrode tab 120 may be an uncoated portion combination in which a plurality of uncoated portions are combined or a separate lead tab coupled to the uncoated portion combination. The electrode tab 120 may be provided at one side and the other side of the electrode assembly 100, respectively. In this case, the electrode tab provided at one side of the electrode assembly 100 may have a first polarity, and the electrode tab provided at the other side may have a second polarity. The cell body 110 may refer to the remaining portion of the electrode assembly 100 excluding the electrode tab 120.

The cell case 200 may be, for example, a pouch case including a multi-layer pouch film. That is, the battery cell 10 may be a pouch-type battery cell. The pouch film may include, for example, a metal layer and a pair of resin layers configured to cover both surfaces of the metal layer. The cell case 200 may include a first case 200A and a second case 200B. The first case 200A and the second case 200B may be configured to cover both surfaces of the electrode assembly 100, respectively. At least one of the first case 200A and the second case 200B may have a groove for forming the accommodation portion 210. The first case 200A and the second case 200B may be contacted and joined to each other to form the peripheral portion 220 of the cell case 200. The peripheral portion 220 may be formed by sealing the region where the first case 200A and the second case 200B contacts, for example, by heat fusion.

Next, the first conductive frame 300 and the second conductive frame 400 will be described in more detail with reference to FIGS. 1 and 2.

Referring to FIGS. 1 and 2, the first conductive frame 300 may include a conductive metal to function as a passage for electrical connection. The first conductive frame 300 may include a first terminal portion 310. The first terminal portion 310 may extend in a direction away from the first surface of the peripheral portion 220 of the cell case 200. Similarly, the second conductive frame 400 may include a conductive metal to function as a passage for electrical connection. The second conductive frame 400 may include a second terminal portion 410. The second terminal portion 410 may extend in a direction away from the second surface of the peripheral portion 220 of the cell case 200. The second terminal portion 410 may be provided at a position corresponding to the first terminal portion 310 provided on the opposite side with the peripheral portion 220 being interposed therebetween. If the first terminal portion 310 and the second terminal portion 410 are provided at positions corresponding to each other as above, when a plurality of battery cells 10 of the present disclosure are stacked, adjacent battery cells 10 may be electrical connected easily.

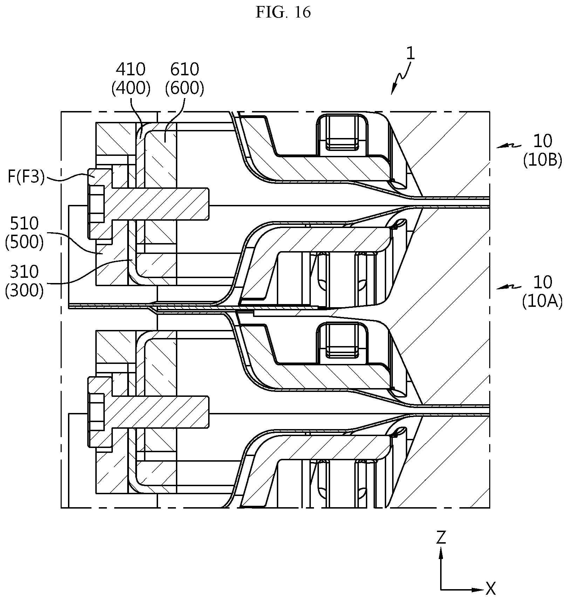

For example, the first terminal portion 310 may extend in an approximately perpendicular direction from the first surface of the peripheral portion 220. Similarly, the second terminal portion 410 may extend in an approximately perpendicular direction from the second surface of the peripheral portion 220, for example. According to this configuration, when forming a cell stack, the first terminal portions 310 and the second terminal portions 410 of ten battery cells adjacent to each other may be arranged side by side, and thus the first terminal portions 310 and the second terminal portions 410 may be fastened easily. The first terminal portion 310 and the second terminal portion 410 may have a fastening hole configured to allow a fastening member F3 (see FIG. 16) to be coupled therein. In this case, the first terminal portion 310 and the second terminal portion 410 are fastened through the fastening member F3, thereby enabling electrical connection and fixation between the battery cells 10 adjacent to each other.

The drawings of the present disclosure show only the case where the first terminal portion 310 and the second terminal portion 410 are provided as a pair, but the present disclosure is not limited thereto. That is, the first conductive frame 300 may have only one first terminal portion 310 or may have three or more first terminal portions 310. Likewise, the second conductive frame 400 may include only one second terminal portion 410 or may include three or more second terminal portions 410. If the first conductive frame 300 has a plurality of first terminal portion 310 and the second conductive frame 400 has a plurality of second terminal portion 410, when connecting the plurality of battery cells 10, a plurality of electrical connection and mechanical fastening components may be provided. This may reduce the electrical resistance and increase the fastening force.

The first terminal portion 310 and the second terminal portion 410 may be provided in the same number. In this case, when a plurality of the same battery cells 10 are stacked, the first terminal portions 310 and the second terminal portions 410 respectively provided in the adjacent battery cells 10 and extending toward each other may be fastened one to one. In this case, when stacking a plurality of the battery cells 10, the battery cells 10 may be electrically connected easily and/or fixed easily.

Meanwhile, a structure in which the first conductive frame 300 and the second conductive frame 400 are provided on both surfaces of the peripheral portion 220, respectively, may be formed not only at one side in the longitudinal direction (direction parallel to the X-axis) of the battery cell 10 but also at the other side. In this case, the conductive frames 300, 400 provided at one side in the longitudinal direction (direction parallel to the X-axis) of the battery cell 10 and the conductive frames 300, 400 provided at the other side may have opposite polarities.

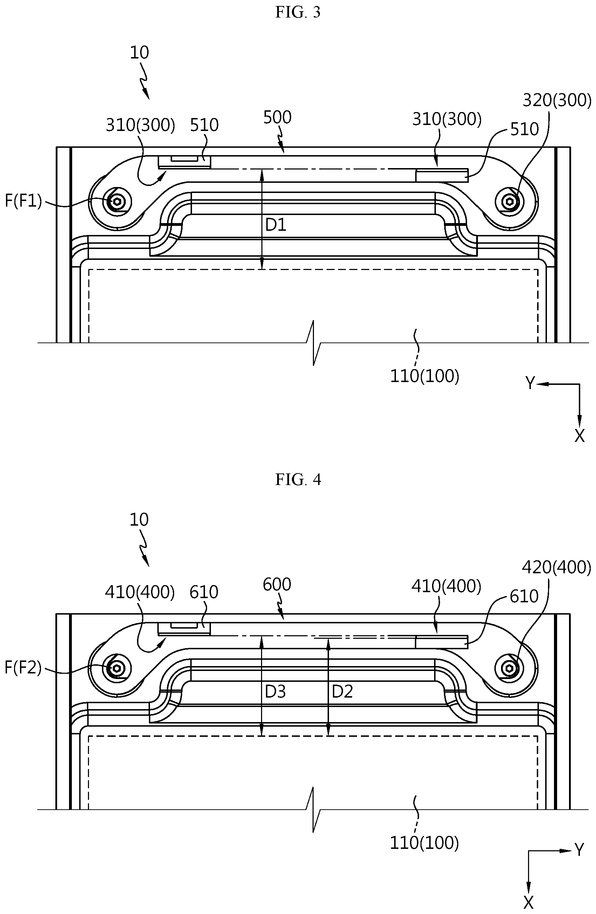

Next, with reference to FIGS. 3 to 5, an exemplary positional relationship between the first terminal portion 310 and the second terminal portion 410 of the present disclosure will be described.

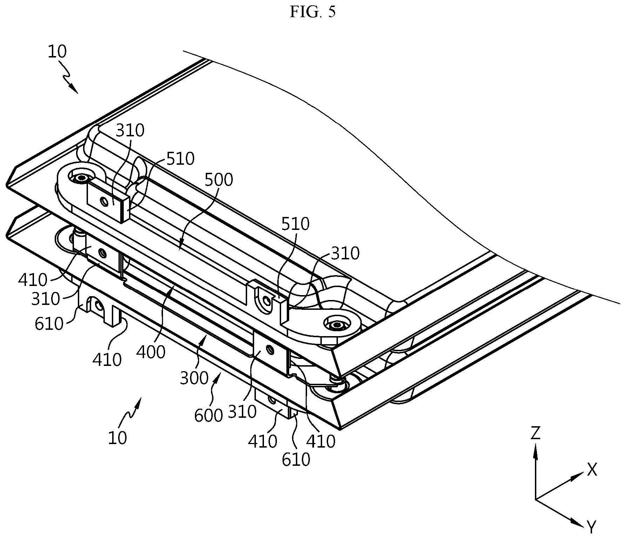

FIGS. 3 and 4 are plan views showing one surface and the other surface of the battery cell shown in FIG. 1, respectively. Also, FIG. 5 is a diagram showing a coupling structure between a conductive frame of the battery cell disposed at the top and a conductive frame of the battery cell disposed at the bottom when a pair of battery cells are coupled according to an embodiment of the present disclosure.

Referring to FIGS. 3 to 5, when a pair of battery cells 10 of the present disclosure are stacked to overlap each other, the first conductive frame 300 and the second conductive frame 400 may be configured so that the first terminal portion 310 and the second terminal portion 410 provided at different battery cells 10 and extending toward each other are at least partially overlapped to face each other. For example, the distance (D1) from the first terminal portion 310 to the cell body 110 and the distance (D2) from the second terminal portion 410, which is located on a side opposite to the first terminal portion 310 with the peripheral portion 220 being interposed therebetween at a corresponding position, to the cell body 110 may be different. If the two distances (D1, D2) are formed to be substantially equal to each other, when a pair of battery cells 10 are stacked to overlap each other, the first terminal portion 310 and the second terminal portion 410 extending toward each other may interfere with each other, so it may be difficult to arrange the first terminal portion 310 and the second terminal portion 410 to overlap and face each other. Meanwhile, this structure is applicable to both the case where one first terminal portion 310 and one second terminal portion 410 are provided and the case where a plurality of first terminal portions 310 and a plurality of second terminal portions 410 are provided.

In another aspect, when a pair of battery cells 10 of the present disclosure are stacked to overlap each other, the first conductive frame 300 and the second conductive frame 400 may be configured so that the first terminal portion 310 and the second terminal portion 410 provided at different battery cells 10 and extending toward each other are at least partially overlapped to contact each other (see FIG. 5). This structure is applicable to both the case where one first terminal portion 310 and one second terminal portion 410 are provided and the case where a plurality of first terminal portions 310 and a plurality of second terminal portions 410 are provided. According to this structure, neighboring battery cells 10 may be electrically connected just by stacking the battery cells 10 to form a cell stack.

Meanwhile, as shown in FIG. 5, the structure in which the battery cells 10 are electrically connected naturally when the battery cells 10 are stacked may be, for example, implemented by the arrangement of the first terminal portion 310 and the second terminal portion 410 as shown in FIGS. 3 and 4. Referring to FIGS. 3 and 4, in the first terminal portion 310 and the second terminal portion 410, which are located on opposite sides with the peripheral portion 220 being interposed therebetween and provided at corresponding positions, the distance (D3) from the outer surface of the terminal portion located closer to the cell body 110 (e.g., the second terminal portion located at the right in FIG. 4) to the cell body 110 and the distance (D1) from the inner surface of the terminal portion located further away from the cell body 110 (e.g., the first terminal portion located at the left in FIG. 3) to the cell body 110 may be formed to be substantially identical. Here, the inner surface of the terminal portion refers to a surface facing the cell body 110 among the two surfaces of the terminal portion, and the outer surface of the terminal portion refers to a surface opposite to the surface toward the cell body 110 among the two surfaces of the terminal portion. In addition, the fact that the distances from the two terminals to the cell body 110 are substantially identical does not mean that they are completely identical, and may be considered as being substantially identical as long as their difference is within the general error range in design. This is because, if the two distances (D1, D2) are different within a very small range, a pair of terminal portions extending toward each other may face and contact each other by stacking neighboring battery cells 10 without a great force.

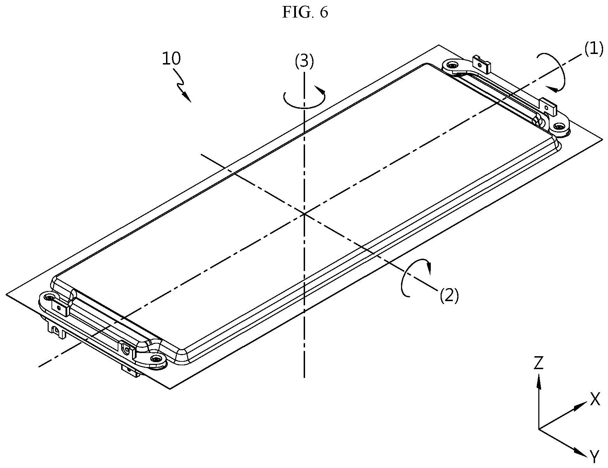

Next, the symmetrical structure of the battery cell 10 of the present disclosure will be described with reference to FIG. 6. FIG. 6 is a drawing to explain the rotationally symmetrical shape of the battery cell according to an embodiment of the present disclosure.

Referring to FIG. 6, the battery cell 10 of the present disclosure may have a rotationally symmetrical shape whose external appearance is substantially identical when being rotated 180 degrees about a central axis passing through a center thereof. The external appearance of the battery cell 10 may be substantially identical when being rotated 180 degrees, for example, about a rotation axis 1 that passes through its center and extends parallel along the longitudinal direction of the battery cell 10 and/or a rotation axis 2 that extends parallel along the width direction of the battery cell 10 and/or a rotation axis 3 that extends parallel to the thickness direction of the battery cell 10. Here, the fact that the external appearance is substantially identical during rotation means that the arrangement positions of the first terminal portion 310 of the first conductive frame 300 and the second terminal portion 410 of the second conductive frame 400 are substantially identical in appearance before and after rotation of the battery cell 10.

Referring to FIG. 6 along with FIGS. 1 and 2, when the battery cell 10 of the present disclosure has a rotationally symmetric structure as described above, there is no need to consider the directionality of the battery cell 10 when forming a cell stack, and thus the process efficiency may be improved. For example, if the battery cell 10 of the present disclosure has a symmetrical shape with substantially the same appearance when being rotated 180 degrees about the rotation axis 1, there is no need to distinguish the first surface of the battery cell 10 and the second surface opposite thereto. In addition, if the battery cell 10 of the present disclosure has a symmetrical shape with substantially the same appearance when being rotated 180 degrees about the rotation axis 2 or the rotation axis 3, when a pair of battery cells 10 are stacked to overlap each other, the first terminal portions 310 and the second terminal portions 410 respectively provided at the different battery cells 10 may be naturally aligned at corresponding positions regardless of whether their polarities are identical.

Meanwhile, the battery cell 10 of the present disclosure may have a symmetrical structure as described above, and may also be configured so that the first terminal portions 310 and the second terminal portions 410 respectively provided at the neighboring battery cells 10 are at least partially overlapped to face each other or are at least partially overlapped to contact each other as described above with reference to FIGS. 3 to 5. According to this structure, even if the battery cells 10 are stacked without considering directionality, the terminal portions may naturally face or contact each other, which may greatly improve the process efficiency when manufacturing a cell stack.

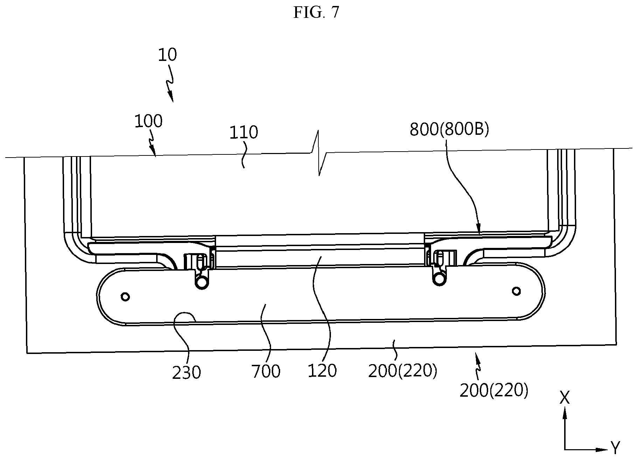

Next, referring to FIG. 7 along with FIG. 2, an electrode lead 700 of the present disclosure will be described. FIG. 7 is a plan view showing the internal structure of the battery cell according to an embodiment of the present disclosure.

Referring to FIGS. 2 and 7, the battery cell 10 of the present disclosure may include an electrode lead 700. The electrode lead 700 may be electrically coupled to the electrode tab 120 of the electrode assembly 100. The electrode lead 700 may be coupled to the electrode tab 120, for example, by welding. The electrode lead 700 may be located inside the cell case 200. The electrode lead 700 may be arranged not to be exposed to the outside of the cell case 200.

According to this arrangement position of the electrode lead 700, the concern about a decrease in the sealing force of the cell case 200 due to the electrode lead 700 being drawn out of the cell case 200 may be resolved. That is, when at least a part of the electrode lead 700 is drawn to the outside of the cell case 200, the sealing force at the region where the electrode lead 700 is drawn out may be deteriorated. In particular, when the cross-sectional area of the electrode lead 700 is expanded to reduce the electrical resistance in the current path, the sealing force at the region where the electrode lead 700 is drawn out may be further reduced due to an increase in thickness and/or width. Meanwhile, when the electrode lead 700 is not drawn to the outside of the cell case 200, there is no concern about the deterioration of the sealing force of the cell case 200, so it may be easy to reduce the electrical resistance of the battery cell 10 by increasing the thickness and/or width of the electrode lead 700 to increase the cross-sectional area.

Meanwhile, the cell case 200 may include a lead accommodation portion 230 configured to have a shape that roughly corresponds to the electrode lead 700. The lead accommodation portion 230 may be, for example, a groove formed in the first case 200A (see FIG. 2) and/or the second case 200B (see FIG. 2). If the lead accommodation portion 230 for accommodating the electrode lead 700 is formed in advance as above before the first case 200A and the second case 200B are coupled, it is possible to prevent stress from occurring due to the thickness of the electrode lead 700 in the peripheral portion 220 when the first case 200A and the second case 200B are coupled, thereby preventing the sealing force from deteriorating.

The electrode lead 700 may have a shape elongating along the width direction (direction parallel to the Y-axis) of the battery cell 10. According to this structure, a sufficient coupling area may be secured between the electrode tab 120 and the electrode lead 700. Accordingly, the bonding strength between the electrode tab 120 and the electrode lead 700 may be improved, and the contact resistance at the coupling portion between the electrode tab 120 and the electrode lead 700 may be reduced.

Meanwhile, when the electrode lead 700 is provided, the first conductive frame 300 may be electrically coupled to the first surface of the electrode lead 700 through the peripheral portion 220. For example, the first conductive frame 300 may include a first lead connection portion 320, and the first lead connection portion 320 may be electrically coupled to the electrode lead 700. When the electrode lead 700 is provided, the second conductive frame 400 may be electrically coupled to the second surface of the electrode lead 700 through the peripheral portion 220. For example, the second conductive frame 400 may include a second lead connection portion 420, and the second lead connection portion 420 may be electrically coupled to the electrode lead 700.

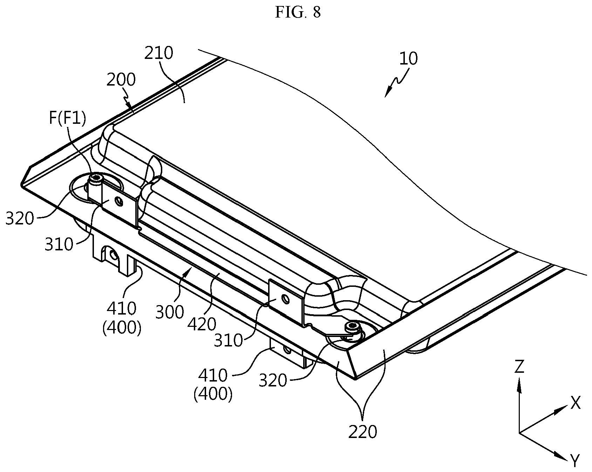

Next, referring to FIGS. 8, 9, and 11, the coupling structure between the conductive frame 300, 400 of the present disclosure and the electrode lead 700 will be described in more detail, and also the pressurization of the peripheral portion 220by the pair of conductive frames 300, 400 will be described.

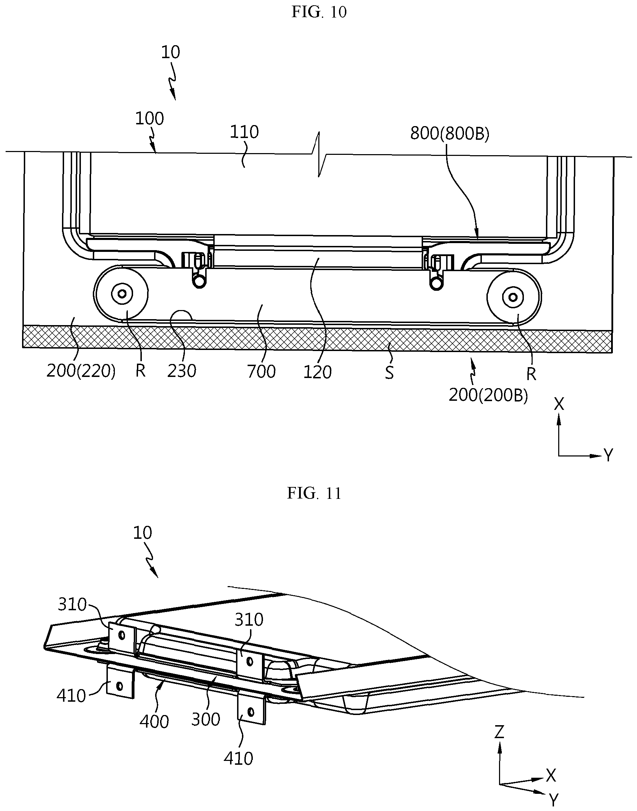

FIG. 8 is a diagram showing the battery cell according to an embodiment of the present disclosure, with the insulating frame disposed at the top being removed, FIG. 10 is a diagram to explain the area where sealing is applied in the battery cell according to an embodiment of the present disclosure, and FIG. 11 is a diagram to explain the pressurization of a peripheral portion by the conductive frame disposed at the top and the conductive frame disposed at the bottom in the battery cell according to an embodiment of the present disclosure.

Referring to FIGS. 8, 9, and 11, the first conductive frame 300 and the second conductive frame 400 may be configured to pressurize both surfaces of the peripheral portion 220 of the cell case 200. For example, the first terminal connection portion 320 and the second terminal connection portion 420 disposed at corresponding positions with the peripheral portion 220 and the electrode lead 700 being interposed therebetween may be fixed by the fastening member F1. In this case, the fastening member F1 may sequentially penetrate through the first terminal connection portion 320, the electrode lead 700, and the second terminal connection portion 420. The penetration order may also be reversed. Another fastening member F2 may be coupled to the end of the fastening member F1 that sequentially penetrates through the components and is exposed to the outside of the penetrated components. The fastening members F1, F2 may be, for example, a bolt and a nut.

The first terminal connection portion 320 and the second terminal connection portion 420 may penetrate one surface and the other surface of the cell case 200, respectively, and come into contact with the electrode lead 700. In this case, the first terminal connection portion 320 and the second terminal connection portion 420 may be respectively fixed on both surfaces of the electrode lead 700 by fastening by the fastening members F1, F2.

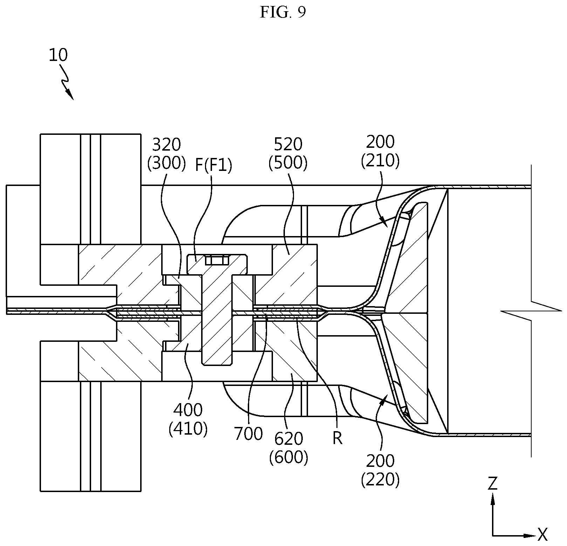

Next, with reference to FIGS. 9 and 10, a structure for strengthening the sealing force in the coupling area between the conductive frame 300, 400 of the present disclosure and electrode lead 700 and/or in the area where the electrode lead 700 is disposed will be described. FIG. 10 is a diagram to explain the area where sealing is applied in the battery cell according to an embodiment of the present disclosure.

Referring to FIGS. 9 and 10, a sealing member R may be applied around the area where the first terminal connection portion 320 and the second terminal connection portion 420 are coupled to the electrode lead 700. The sealing member R may prevent the sealing force from being weakened at the corresponding area as the first terminal connection portion 320 and the second terminal connection portion 420 penetrate one surface and the other surface of the cell case 200, respectively, for coupling with the electrode lead 700. The sealing member R may be configured to surround the first terminal connection portion 320 and may be interposed between the first case 200A (see FIG. 2) and the electrode lead 700. The sealing member R may be configured to surround the second terminal connection portion 420 and may be interposed between the second case 200B (see FIG. 2) and the electrode lead 700.

Meanwhile, in the peripheral portion 220, the sealing region S may be formed outside the area where the electrode lead 700 is accommodated. However, the present disclosure is not limited thereto. For example, the sealing region S may be the entire area where the first case 200A and the second case 200B are in contact. If the area occupied by the sealing region S is increased as above in the peripheral portion 220, the sealing performance of the cell case 200 may be improved.

Next, the insulating frames 500, 600 of the present disclosure will be described with reference to FIGS. 2 to 4 and FIG. 9.

Referring to FIGS. 2 to 4 and FIG. 9, the battery cell 10 of the present disclosure may include a first insulating frame 500 and a second insulating frame 600. The first insulating frame 500 may be configured to partially cover the first conductive frame 300. The second insulating frame 600 may be configured to partially cover the second conductive frame 400. According to this configuration, the first conductive frame 300 and the second conductive frame 400 of the present disclosure are insulated except for some areas of the terminal portions 310, 410 for the connection between the battery cells 10 or between the battery cell 10 and an external device, so concerns about unnecessary electrical contact may be resolved.

The first insulating frame 500 may include a first terminal cover 510 configured to cover one surface of the first terminal portion 310. The first insulating frame 500 may include a first connection portion cover 520 configured to surround the first lead connection portion 320. Similarly, the second insulating frame 600 may include a second terminal cover 610 configured to cover one surface of the second terminal portion 410. The second insulating frame 600 may include a second connection portion cover 620 configured to surround the second lead connection portion 420.

The first insulating frame 500 and the second insulating frame 600 may be configured to pressurize both surfaces of the peripheral portion 220. For example, as shown in FIG. 9, the first insulating frame 500 and the second insulating frame 600 may be configured to pressurize toward the peripheral portion 220 by the first conductive frame 300 and the second conductive frame 400 when the first conductive frame 300 and the second conductive frame 400 are coupled to the electrode lead 700. Accordingly, the first insulating frame 500 and the second insulating frame 600 may strengthen the sealing force of the peripheral portion 220, together with the first conductive frame 300 and the second conductive frame 400.

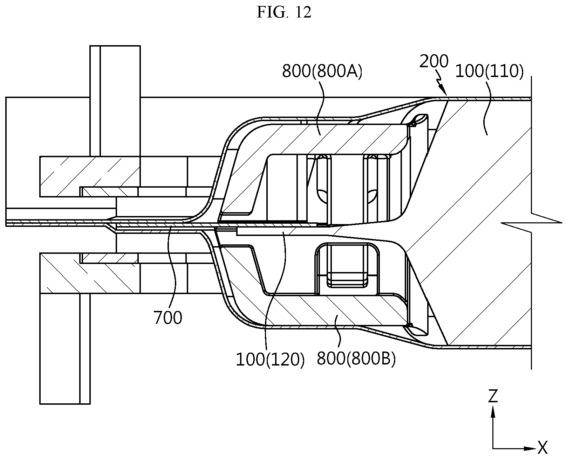

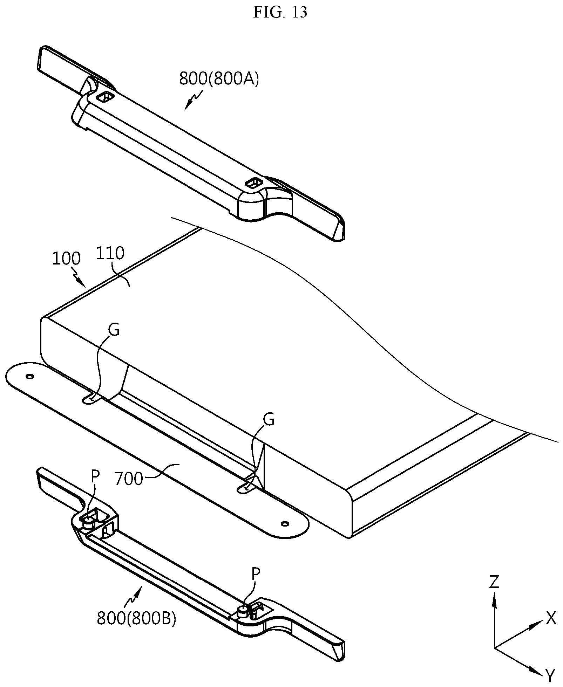

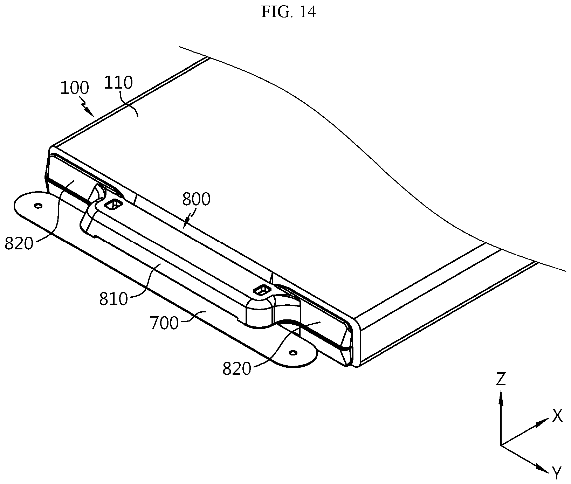

Next, with reference to FIGS. 12 to 14, a tab cover member 800 of the present disclosure will be described. FIG. 12 is a cross-sectional view, taken along line B-B' of FIG. 1, and FIGS. 13 and 14 are diagrams to explain the coupling structure of an electrode lead and a tab cover member of the present disclosure.

Referring to FIGS. 12 to 14, the battery cell 10 may include a tab cover member 800. The tab cover member 800 is located inside the cell case 200 and may be configured to cover the coupling region of the electrode lead 700 and the electrode tab 120. When the tab cover member 800 is provided, it is possible to prevent the coupling region between the electrode tab 120 and the electrode lead 700 from being damaged.

The tab cover member 800 may be configured such that one side is supported by the electrode lead 700 fixed on the peripheral portion 220 and the other side is supported by the cell body 110. In this case, the tab cover member 800 may prevent the electrode assembly 100 from moving inside the cell case 200, thereby preventing an impact from being applied to the coupling region between the electrode tab 120 and the electrode lead 700. Therefore, even if an impact is applied to the battery cell 10, it is possible to prevent defects from occurring due to damage to the coupling region between the electrode tab 120 and the electrode lead 700.

The tab cover member 800 may include a fixing protrusion P. In this case, the electrode lead 700 may have a protrusion accommodation portion G configured to accommodate the fixing protrusion P. The protrusion accommodation portion G may be, for example, a groove indented from an edge of the tab cover member 800 adjacent to the electrode assembly 100 among edges of the tab cover member 800. For stable fixation of the tab cover member 800, the fixing protrusion P and the protrusion accommodation portion G may be provided in plurality.

The tab cover member 800 may be formed by coupling a pair of cover members 800A and 800B. The tab cover member 800 may include a body portion 810 and a wing portion 820. The body portion 810 may have a space to accommodate the coupling region of the electrode tab 120 and the electrode lead 700. The fixing protrusion P may be provided in the body portion 810. The wing portion 820 may be configured to extend from the body portion 810 and face the cell body 110. Inside the cell case 200, the movement of the body portion 810 in a direction away from the cell body 110 may be restricted by the electrode lead 700, and the wing portion 820 may be in close contact with the cell body 110 to restrict movement in a direction toward the cell body 110.

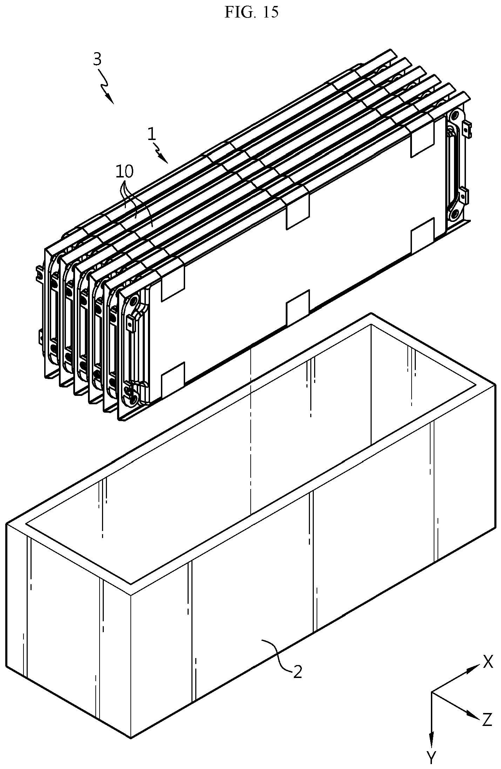

Next, with reference to FIGS. 15 and 16, a battery pack 3 according to an embodiment of the present disclosure will be described. FIG. 15 is a diagram showing a battery pack according to an embodiment of the present disclosure, and FIG. 16 is a drawing showing a terminal fastening structure for forming a cell stack of the present disclosure.

First, referring to FIG. 15, the battery pack 3 according to an embodiment of the present disclosure may include a cell stack 1 including a plurality of battery cells 10 of the present disclosure as described above and a pack housing 2 accommodating the cell stack 1. Accordingly, the battery pack 3 of the present disclosure may be manufactured without going through the battery module stage. In other words, the battery pack 3 of the present disclosure may be manufactured through a cell-to-pack process.

Meanwhile, in the cell stack 1 applied to the battery pack 3 of the present disclosure, the plurality of battery cells 10 may be electrically connected to each other. In the first battery cell 10 and the second battery cell 10 adjacent to each other among the plurality of battery cells 10, the first conductive frame 300 provided in the first battery cell 10 and the second conductive frame 400 provided in the second battery cell 10 may be electrically coupled by a fastening member F3. The fastening member F3 may be, for example, configured to penetrate the first terminal portion 310 and the second terminal portion 410 that at least partially overlap to face each other. The fastening member F3 may be a bolt, for example.

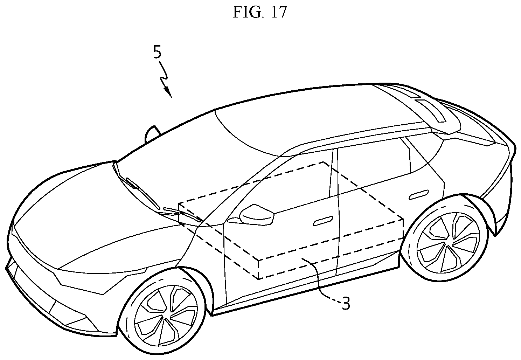

Next, with reference to FIG. 17, a vehicle 5 according to an embodiment of the present disclosure will be described. FIG. 17 is a drawing showing a vehicle according to an embodiment of the present disclosure.

Referring to FIG. 17, the vehicle 5 according to an embodiment of the present disclosure may include the battery pack 3 according to an embodiment of the present disclosure as described above. The vehicle 5 may operate by receiving power from the battery pack 3 of the present disclosure. The vehicle 5 may be, for example, an electric vehicle (EV), a hybrid electric vehicle (HEV), a plug-in hybrid electric vehicle (PHEV), or the like.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### Reference Signs

1: cell stack
2: pack housing
3: battery pack
5: vehicle
10: battery cell
100: electrode assembly
110: cell body
120: electrode tab
200: cell case
200A: first case
200B: second case
210: accommodation portion
220: peripheral portion
S: sealing region
230: lead accommodation portion
300: first conductive frame
310: first terminal portion
320: second lead connection portion
400: second conductive frame
410: second terminal portion
420: second lead connection portion
500: first insulating frame
510: first terminal cover
520: first connection portion cover
600: second insulating frame
610: second terminal cover
620: second connection portion cover
700: electrode lead
G: protrusion accommodation portion
800: tab cover member
800A: first cover member
800B: second cover member
810: body portion
820: wing portion
P: fixing protrusion
R: sealing member
F (F1, F2, F3): fastening member

## Claims

1. A battery cell, comprising:
an electrode assembly having a cell body and an electrode tab extending from the cell body;
a cell case having an accommodation portion configured to accommodate the electrode assembly and a peripheral portion extending outward from the accommodation portion;
a first conductive frame located on a first surface of the peripheral portion and electrically connected to the electrode tab through the peripheral portion; and
a second conductive frame located on a second surface of the peripheral portion and electrically connected to the electrode tab through the peripheral portion.

2. The battery cell according to claim 1,
wherein the first conductive frame includes a first terminal portion extending in a direction away from the first surface, and
wherein the second conductive frame includes a second terminal portion extending in a direction away from the second surface at a position corresponding to the first terminal portion.

3. The battery cell according to claim 2,
wherein when a pair of battery cells are stacked to overlap each other, the first conductive frame and the second conductive frame are configured so that the first terminal portion and the second terminal portion provided at different battery cells and extending toward each other are at least partially overlapped to face each other.

4. The battery cell according to claim 2,
wherein when a pair of battery cells are stacked to overlap each other, the first conductive frame and the second conductive frame are configured so that the first terminal portion and the second terminal portion provided at different battery cells and extending toward each other are at least partially overlapped to contact each other.

5. The battery cell according to claim 4,
wherein a distance from an outer surface of one of the first terminal portion and the second terminal portion located closer to the cell body to the cell body and a distance from an inner surface of the other of the first terminal portion and the second terminal portion located farther from the cell body to the cell body are substantially identical.

6. The battery cell according to claim 2,
wherein the first terminal portion and the second terminal portion are provided in plurality, respectively.

7. The battery cell according to claim 2,
wherein the battery cell has a rotationally symmetrical shape whose appearance is substantially identical when being rotated 180 degrees about a central axis passing through a center thereof.

8. The battery cell according to claim 7,
wherein when a pair of battery cells are stacked to overlap each other, the first conductive frame and the second conductive frame are configured so that the first terminal portion and the second terminal portion provided at different battery cells and extending toward each other are at least partially overlapped to face each other.

9. The battery cell according to claim 7,
wherein when a pair of battery cells are stacked to overlap each other, the first conductive frame and the second conductive frame are configured so that the first terminal portion and the second terminal portion provided at different battery cells and extending toward each other are at least partially overlapped to contact each other.

10. The battery cell according to claim 9,
wherein the first terminal portion and the second terminal portion provided at corresponding positions with the peripheral portion being interposed therebetween are configured so that a distance from an outer surface of one of the first terminal portion and the second terminal portion located closer to the cell body to the cell body and a distance from an inner surface of the other of the first terminal portion and the second terminal portion located farther from the cell body to the cell body are substantially identical.

11. The battery cell according to claim 2,
wherein each of the first terminal portion and the second terminal portion has a fastening hole configured to allow a fastening member to be coupled.

12. The battery cell according to claim 1, further comprising:
an electrode lead electrically coupled to the electrode tab and located inside the cell case,
wherein the first conductive frame is electrically coupled to the first surface of the electrode lead through the peripheral portion, and
wherein the second conductive frame is electrically coupled to the second surface of the electrode lead through the peripheral portion.

13. The battery cell according to claim 12,
wherein the first conductive frame and the second conductive frame are configured to pressurize both surfaces of the peripheral portion.

14. The battery cell according to claim 12, further comprising:
a first insulating frame configured to partially cover the first conductive frame; and
a second insulating frame configured to partially cover the second conductive frame.

15. The battery cell according to claim 14,
wherein the first insulating frame and the second insulating frame are configured to pressurize both surfaces of the peripheral portion.

16. A battery pack, comprising:
a cell stack including a plurality of battery cells according to any one of claims 1 to 15; and
a pack housing configured to accommodating the cell stack.

17. The battery pack according to claim 16,
wherein the plurality of battery cells are electrically connected to each other, and
wherein in a first battery cell and a second battery cell adjacent to each other among the plurality of battery cells, the first conductive frame provided at the first battery cell and the second conductive frame provided at the second battery cell are electrically coupled by a fastening member.

18. A vehicle, comprising the battery pack according to claim 16.
